Europäisches Patentamt

(19) European Patent Office

Office européen des brevets

(11) Publication number: **0 152 252**
**A2**

## (12) EUROPEAN PATENT APPLICATION

(21) Application number: 85300730.0

(22) Date of filing: 04.02.85

(51) Int. Cl.⁴: **H 02 K 53/00**
**H 02 N 11/00, H 02 K 49/10**

(30) Priority: 09.02.84 JP 24042/84
17.04.84 JP 78268/84
25.08.84 JP 128926/84

(43) Date of publication of application:
21.08.85 Bulletin 85/34

(84) Designated Contracting States:
AT BE CH DE FR GB IT LI LU NL SE

(71) Applicant: UNI COM CORPORATION
137, Aburaya-cho Tominokoji-higashiru Nakagyo-ku
Kyoto-shi Kyoto-fu(JP)

(72) Inventor: Kuroda, Takeshi
5-go, 3-ban Higashiatago-cho
Kure-shi Hiroshima-ken(JP)

(74) Representative: Calderbank, Thomas Roger et al,
MEWBURN ELLIS & CO. 2/3 Cursitor Street
London EC4A 1BQ(GB)

(54) Permanent magnet prime mover.

(57) A permanent magnet prime mover has a plurality of rotor permanent magnets (2) which are mounted on the periphery of a rotor (1) at a constant center angle, and a plurality of casing permanent magnets (4) which are arranged on the interior periphery of a casing (3) housing the rotor (1) at a constant center angle to face to one another with the same polarity. By moving the casing magnets (4) close to the rotor magnets (2) in the radial direction in order, a rotation force is given to the rotor (1) to rotate the rotor (1) continuously by utilizing repulsive force of the magnets (2, 4) which is strong in proportion to the inverse square of the distance of the gap between the opposing magnets (2, 4).

Fig. 1

Permanent Magnet Prime Mover

This invention relates to a prime mover represented by such as an internal combustion engine, an electric motor and a hydraulic motor which are adapted for an automobile, a ship, an agricultural machine, a generator and the like.

The internal combustion engine and the electric motor have been used more popularly among the said prime movers.

As the internal combustion engine, there are a reciprocating engine which converts reciprocating motions of a piston to revolving motions by means of a crank shaft by igniting a mixture of fuel such as gasoline or gas and air in a cylinder or cylinders, and a rotary engine in which a triangular rotor is rotated with exprosion of the mixture of fuel and air in a combustion chamber of elliptical shape.

However, these internal combustion engine including both of the reciprocal engine and the rotary engine, are small in a ratio of output power to input, but great in the amounts of fuel consumption and a piston displacement.

As the result, it is well known that we face serious social problems concerning economization of natural resources and environmental pollutions such as air pollution.

Further, there is known the electric motor that is spotlighted as a prime mover of low-pollusion and nursing resources.

However, the electric motor has a little difference in a ratio of output power to input, comparing with the above-mentioned internal combustion engine. Therefore, it needs an electric power source of high capacity in order to supply the great amount of electric energy constantly and for a long time. Particularly, in the case of movable machines such as an automobile, it needs a battery of high capacity, but such a battery has not yet been on the stage of practice and there lie many technical problems to be solved as a prime mover adapted for movable vehicles such as an automobile.

Further, there are disadvantages that such a machine becomes big and heavy as a whole and that a rotation controller, which is an essential element for a prime mover, has to be constructed by an electric controller and therefore its cost becomes very high.

Moreover, hydraulic motors such as air motors are very small in a ratio of output power to input in comparison with both of the above-mentioned types and further its upper limitation of rotation speed is low

- 3 -

0152252

and its applicable range is very narrow.

This patent has an object to provide a permanent magnet prime mover which constantly generates a high power magnified with a small input energy several times or several ten times by utilizing repulsive force in the properties of magnetism provided with a permanent magnet and which is constructed compact and light and has a very wide range of application.

To achieve the above-mentioned object, according to this invention, a permanent magnet prime mover in which an output shaft is rotated continuously by utilizing permanent magnets, said prime mover comprising a rotor operatively connected to the output shaft, rotor permanent magnets disposed respectively on the periphery of the rotor at plural positions thereof each having the same radius and by leaving a constant distance between the magnets in the peripheral direction thereof, a casing for housing the rotor, casing permanent magnets mounted respectively on the interior periphery of the casing at plural positions thereof by leaving a constant distance therebetween in the peripheral direction thereof and arranged in such a state that these magnets are faced to the rotor magnets with the same magnetic polarity, reciprocating means for reciprocatingly moving the casing permanent magnets respectively against the rotor permanent magnets to be away from and closely approach the same, and control means for actuating the reciprocating means in order along a direction of rotation of the rotor so as to synchronize with the rotation of the rotor.

The permanent magnetic prime mover of this invention having the above-mentioned characteristic elements functions as follows.

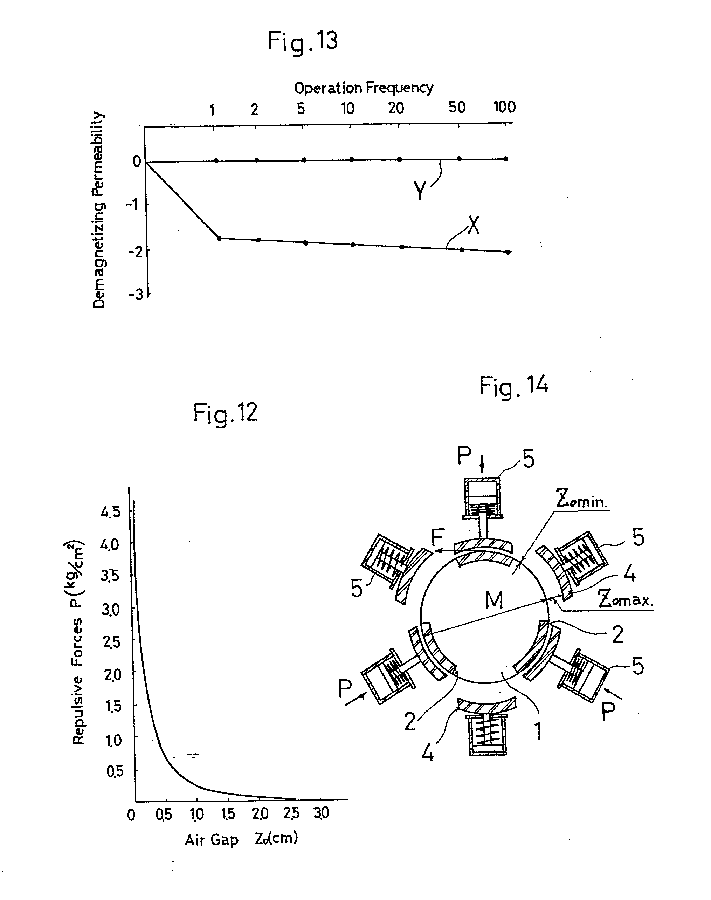

When one of the casing permanent magnets is moved inwardly of the casing in the radial direction thereof to synchronize with rotation of the rotor so as to decrease a distance of an air gap between the opposing permanent magnets, a strong repulsive force $(P(kg/cm^2))$ is generated at the inverse square of the distance of the air gap $(Zo(cm))$ between the opposing permanent magnets, as shown in a graph of Fig. 12.

When such a strong repulsive force is generated in order along the rotation of the rotor, a great difference of magnetic pressure occurs in order between zone or area generating the strong repulsive force and a zone or area that is offset to the former area in the direction of rotation, the rotor starts to rotate toward the area of low magnetic pressure.

Thus, a strong and continuous rotation is obtained by utilizing effectively repulsive force in properties

- 5 -

0152252

of magnetism provided with permanent magnets only by moving the casing permanent magnets slightly in the radial direction thereof.

Recently, a rare-earth magnet, which has maximum energy product (BH) having a value more than 15 MG·Oe and coercive force (MHc) having a value over 30 KOe, is on the stage of practice since its manufacturing technics progress greatly. Further, such high coercive force magnets show a very high stability in a mode of repulsive movement with the same magnetic polarity.

By the way, Fig. 13 is a graph showing the results of measurement of demagnetizing states when two permanent magnets are operated repeatedly to be close to each other against repulsive force in a mode of repulsive movement with the same magnetic polarity. As is clear from the graph, these permanent magnets are gradually demagnetized where these are contacted to each other as shown with a line X, but have a characteristic that demagnetization is made little after stabilizing demagnetization of 5 to 10 percent as shown with a line Y. Further, demagnetization due to heat depends upon coercive force (MHc) of the magnets per se and there is little demagnetization when the magnets are heated at high temperature if they have a value of MHc over 30 KOe.

As is more clear from the above explanation, this invention enables a strong and continuous rotation to be produced and kept surely and constantly for a long time.

Accordingly, this invention has the following advantages:

1.    It is possible to obtain a high output from a very small amount of input energy by magnifying the same at several times or several ten times, which input energy is sufficient for slightly moving the casing permanent magnets of both the permanent magnets opposed to one another with the same magnetic polarity. Namely, a ratio of output to input may be increased in comparison with any type of the prior prime movers.

2.    In relation to the item 1 above, it is possible to increase a ratio of output to weight and also a ratio of output to size or bulk.

3.    Even if internal combustion engines using fuel are provided as the reciprocating means, it can provide a prime mover of nursing resources and low pollution.

4.    It is easy to control the rotation speed.

5.    As the results mentioned in items 1 to 4 above, it is obtained a very wide usage from an engine for automobiles to a prime mover of smaller power for industrial equipments.

Another object of this invention is to provide a permanent magnet prime mover which may further increase a ratio of output to input by elaborating an arrangement of permanent magnets.

A further object of this invention is to provide a permanent magnet prime mover which carries out a smooth and continuous rotation without deflection by considering the same dynamically.

Other objects and advantages of this invention will be apparent from the following description.

The drawings show embodiments of a permanent magnet prime mover according to this invention in which:-

Fig. 1 is a sectional front view of the permanent magnet prime mover partly showing an external appearance,

Fig. 2 is a sectional side view thereof partly showing external appearance,

Fig. 3 is an enlarged sectional front view taken with lines III-III in Fig. 2,

Fig. 4 is an enlarged sectional front view taken with lines IV-IV in Fig. 2,

Fig. 5 is a descriptive illustration showing magnetic lines of force,

Fig. 6A to Fig. 6C are descriptive illustrations showing rotational operations,

Fig. 7A and Fig. 7B are an enlarged sectional front view andan enlarged sectional side view of an essential portion of another embodiment, respectively,

Fig. 8 is an enlarged vertical sectional view of an essential portion of a further embodiment,

Fig. 9A and Fig. 9B are a brief front view of each of essential portions of further embodiments, respectively,

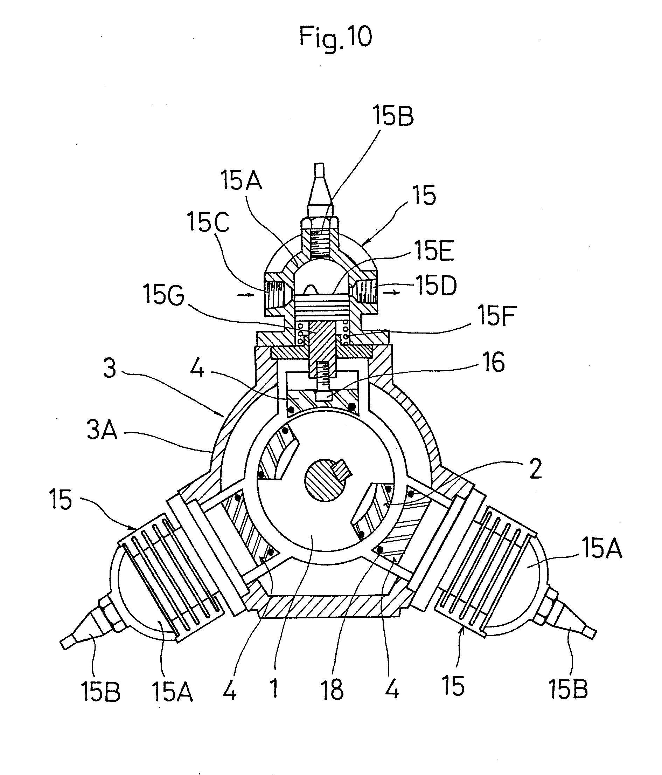

Fig. 10 and Fig. 11 relates to a further embodiment in which Fig. 10 is a vertical sectional front view and Fig. 11 is a vertical sectional side view,

Fig. 12 is a graph showing relationship between an air gap and repulsive force when the same magnetic polarity of two permanent magnets are faced to each other,

Fig. 13 is a graph showing property or characteristic demagnetization of a permanent magnet,

Fig. 14 to Fig. 18 relate to the gist of experiment made by using a sample model in order to explain formulas of the principle of the prime mover in the embodiments concerning this invention, in which

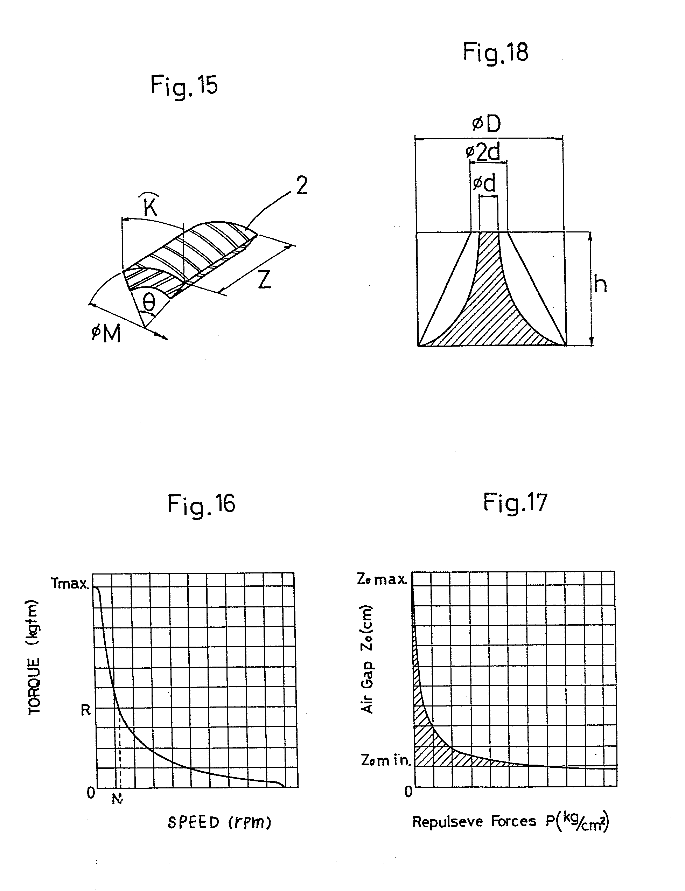

Fig. 14 shows a sample model for experiment, Fig. 15 shows a shape of a permanent magnet, Fig. 16 is a graph showing a characteristic curve relating to revolution-torque, Fig. 17 is a graph showing a characteristic curve  relating to air gap-repulsive force, Fig. 18 is a view of capacity of a cylinder.

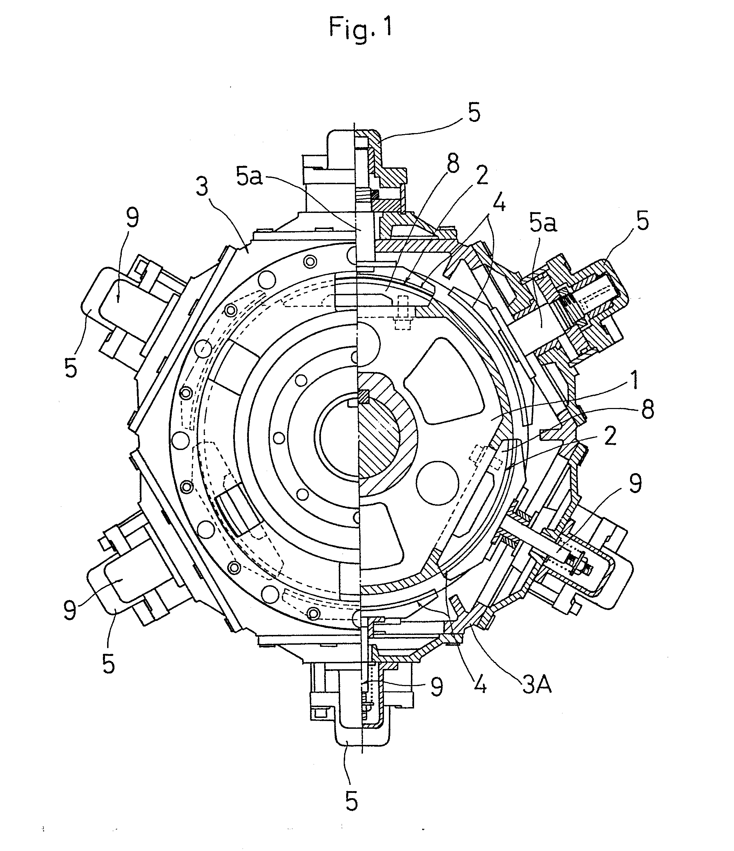

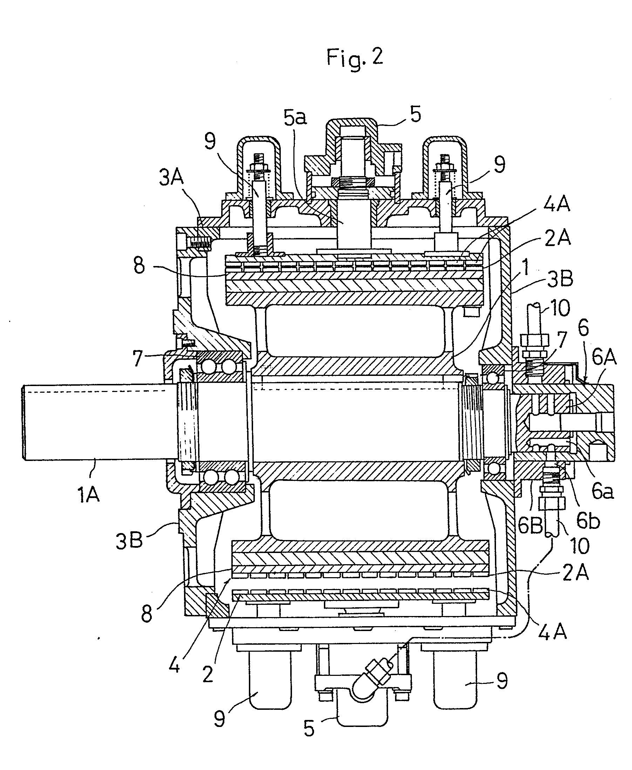

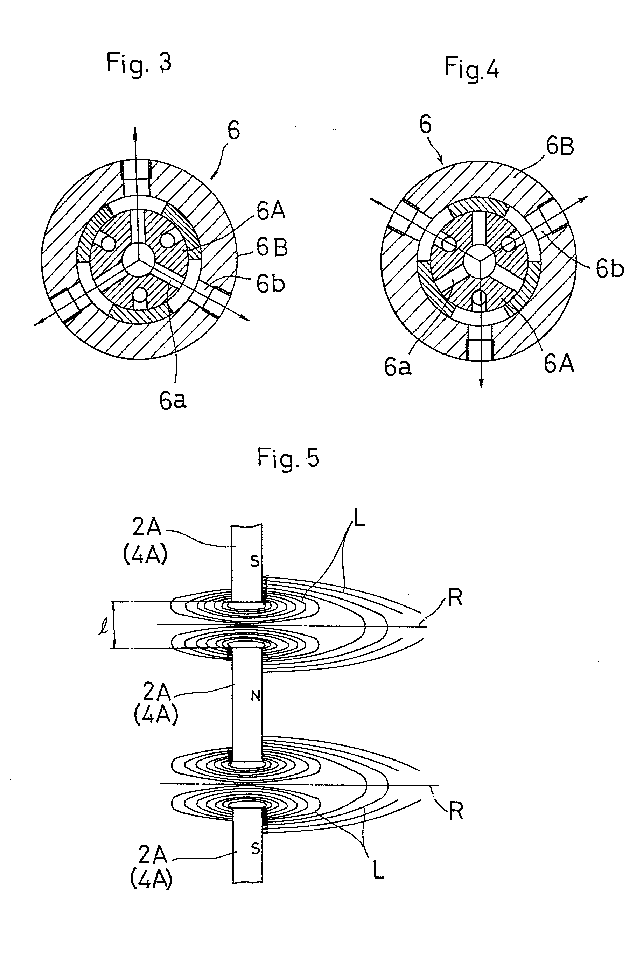

As shown in Figs. 1 and 2, the numeral 3 indicates a casing which comprises a tubular member 3A formed in the shape of substantially a hexagon in a direction of an axis of an output shaft 1A housed therein, and lids 3B and 3B each being secured to both of the ends of the casing 3. 1 is a rotor which is integrally secured to the output shaft 1A which is rotatably mounted to penetrate the casing 3 via bearings 7 and 7 which are fittingly supported at portions of the lids 3 and 3 corresponding to an axis of the tubular member 3A of the casing. A rotor permanent magnet 2 is secured at three positions on the periphery of the rotor 1 by means of a holder 8 respectively. The three rotor permanent magnets 2 are arranged to have the same distance (at a center angle of 120 degrees) in the direction of the periphery of the rotor 1 and to have the same radius. 4 is a casing permanent magnet which is arranged at six positions on the interior periphery of the tubular member 3A of the casing 3 to have the same distance therebetween (at a center angle of 60 degrees) in the direction of the interior periphery. Each of these six casing permanent magnets 4 is secured to an end of each of cylinder rods 5a of six single-action air cylinders 5 to face or oppose to the rotor permanent magnets 2, respectively. These air cylinders 5 are arranged securedly on the periphery of the tubular member 3A to have the same distance therebetween in the direction of the periphery, so that an air gap between the opposing permanent magnets 2 and 4 may be varied within a range of 1 mm to 10 mm by a reciprocal movement of the air cylinder 5 along the radial direction of the rotor 1. The six air cylinders 5 are divided into two groups one of which consists of three air cylinders which are alternately arranged in the direction of the periphery of the tubular member 5A. As shown in Figs. 2 to 4, a rotary valve 6 is provided as control means for controlling the two groups of the air cylinders 5 to be operated alternately in order. The rotary valve 6 comprises a rotary valve member 6A which is mounted on an end portion of the casing 1 in the direction of an axis of rotation to be rotatable in integral with the rotor 1, and a tubular valve casing 6B positioned at the periphery of the rotary valve member 6A and having air distributing passages 6b which are connected to an air passage 6a in order, which passage 6a is bored in the rotary valve member 6A. Each of the air distributing passages 6b of the tubular valve casing 6B in the rotary valve 6 and each of the air cylinders 5 are connected to each other by means of air hoses 10. Thereby, the casing permanent magnets 4 are moved reciprocatingly away from and very close to the rotor permanent magnets 2 alternately by each of the above mentioned groups to synchronize with rotation of the rotor 1. As shown in Fig. 5, each of the rotor permanent magnets 2 and the casing permanent magnets 4 comprise a plurality of magnet elements 2A and 4A which are arranged alternately to be an opposite polarity by leaving a suitable distance (1) therebetween.

In the drawings, 9 indicates a guide mechanism for guiding movement of the casing permanent magnets 4 in the radial direction by means of each of the air cylinders 5 without bending or torsion.

Now, it is described briefly about operation of rotation of the prime mover which is constructed in the three polar shape as mentioned above.

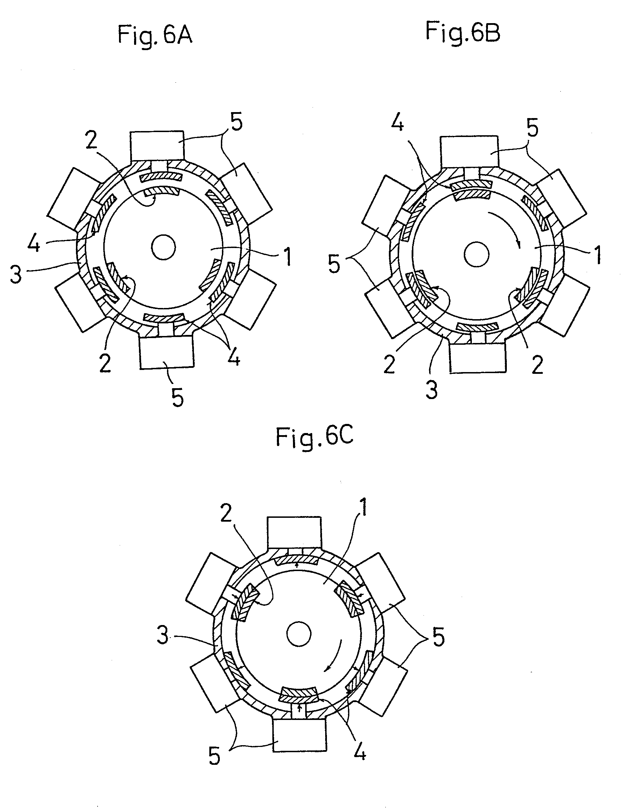

Fig. 6A shows a stop state of rotation and from the state a compressed air is distributingly supplied to the three air cylinders 5, which comprises a group of the air cylinders, by means of the rotary valve 6 so as to move the corresponding casing permanent magnets 4 to approach the rotor 1. When the air gap between the casing and rotor permanent magnets 2 and 4 is varied to a minimum (1 mm) as shown in Fig. 6B, a magnetic pressure generates in the direction of rotation between the rotor 1 and the casing 3, and the rotor 1 starts to rotate in a direction indicated with an arrow, where a magnetic pressure is low. By this rotation, when each of the rotor permanent magnets 2 reach the position (the magnetic field) of the three air cylinders 5 comprising another group thereof, the rotary valve 6 is automatically switched so as to retract the former three air cylinders 5 and to cause the latter three air cylinders 5 extend and then the casing permanent magnets 4 corresponding to the latter three air cylinders 5 are moved in a direction to be close to the rotor 1, as shown in Fig.6C, and in the same manner a magnetic pressure generates between the rotor 1 and the casing 3 so as to rotate the rotor 1 continuously.

In the above mentioned embodiment, the rotor and casing permanent magnets 2 and 4 comprise a plurality of magnet elements 2A and 4A, which are arranged alternately with an opposit polarity by leaving a suitable distance $\underline{l}$ therebetween. In this case, as shown in Fig. 5, the magnetic line of force $\underline{L}$ generating from N-poles of a set of the magnetic elements 2A and 4A enters S-poles of another set of the magnet elements 2A and 4A located adjacent the former magnet elements in the direction of rotation in the state that the magnetic line of force takes a roundabout way to the S-poles. In the gaps between each set of the magnet elements 2A, 2A and 4A, 4A, located adjacent to each other, there occurs repulsion between entering of the magnetic line of force L from the N-poles of the former set of the magnetic elements 2A and 4A into the S-poles of the reverse thereof, and entering of the magnetic line force L from the N-poles of the reverse of the latter magnets into the S-poles thereof. In combination of these functions, the magnetic line of force L projects greatly in the radial direction R so as to enlarge a component thereof in the radial direction. Thus, repulsion due to each of the enlarged components of the magnetic lines of force L, is generated respectively at plural positions in the direction of rotation and as the results, it becomes possible to increase repulsive force between the rotor permanent magnets 2 and the casing permanent magnets 4 for making rotation of the rotor 1. Thereby, rotation torque of the rotor 1 can be further increased in comparison with one which utilizes a single permanent magnet.

Further, as the permanent magnets 2 and 4, it is the best to use a rare-earth magnet which has characteristics of great energy product and high coercive force, and as the materials giving such characteristics, it may be listed cobalt, cerium, neodymium and samarium.

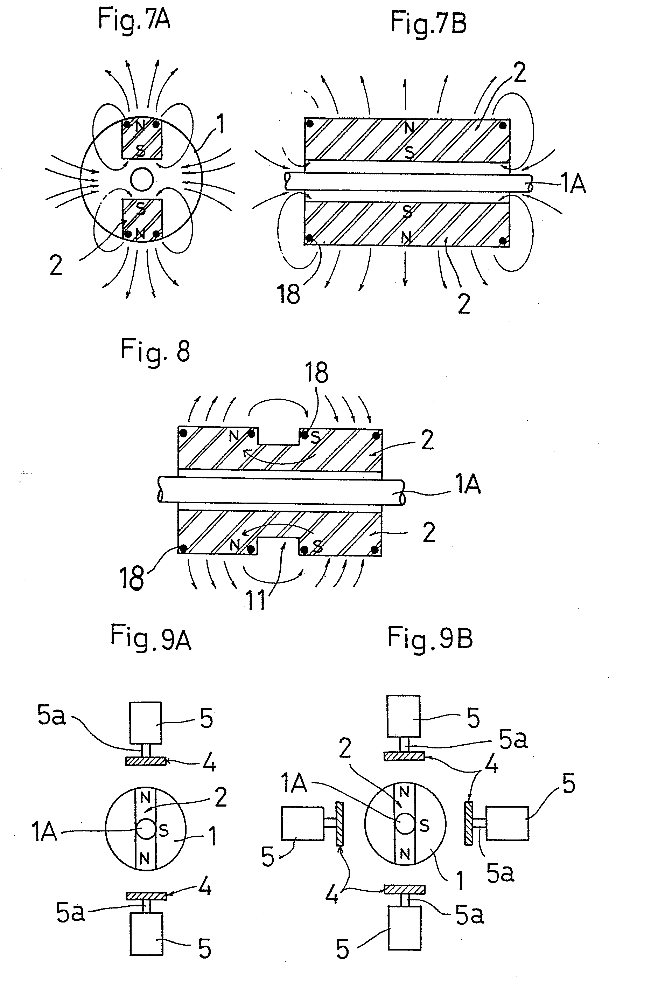

In the above embodiment, a two-pole shape may be utilized as the rotor permanent magnets 2, as shown in Figs. 7A and 7B. In this case, however, since a magnetic circuit or path indicated with an arrow is formed, it is necessary to approach the S-pole of the rotor permanent magnet 4, which is located on the side of a center of rotation, to a deep position, that is the center of the rotation as close as possible in order to evade affection of attraction by the casing permanent magnet 4.

Further, it is of course possible to use a multipole magnet as the rotor permanent magnet 2, but in this case, since there is no good division of magnetism between the multi-poles and therefore particularly a single permanent magnet is used as shown in Fig. 8, it is necessary to form a peripheral groove 11 between the poles and according to this arrangement the casing permanent magnet 4 is constructed in the same manner. It is noted that multiplication of the poles is limited to three or four poles. Further, as an arrangement of the casing permanent magnets 4, in view point of dynamics, in order to make it possible that repulsive force of the rotor and casing permanent magnets 2 and 4 does not act on the output shaft 1A integral with the rotor 1 to bend the shaft, namely to cancel the bending force acting on the output shaft 1A, it is preferable to arrange even-numbered permanent magnets at a constant distance to face one another in the radial direction of the rotor 1, as shown in Fig. 9A and Fig. 9B or in the above-mentioned embodiment, thereby vibration of the rotor 1 may be controlled to be as small as possible.

Next, a second embodiment of this invention will be described. Since the second embodiment is very similar to the first embodiment in construction, the same members are given to the same numerals and their descriptions are omitted here.

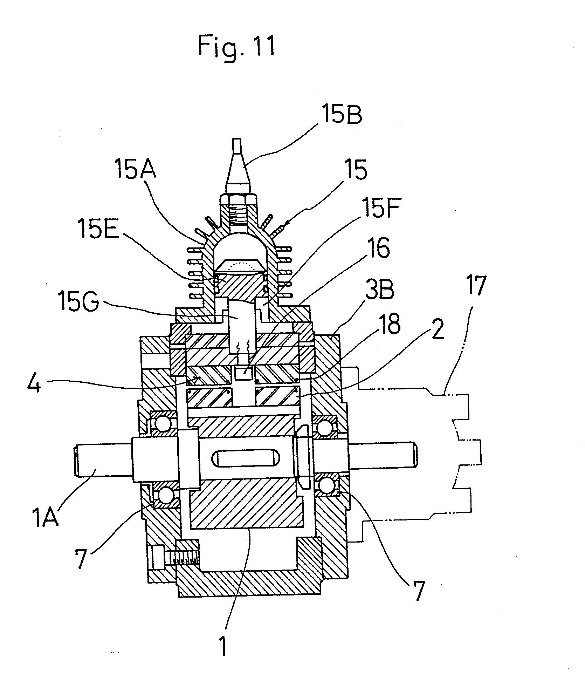

Different points between the second embodiment as shown in Figs. 11 and 12 and the first embodiment are as follows. First, reciprocating means for reciprocatingly moving the casing permanent magnets 4, are reciprocating engines 15 which uses fuel such as gasoline or gas. Each of the engines 15 has an ignition plug 15B respectively on each of cylinder heads 15A and are provided with a fuel supplying inlet 15C and an exhaust outlet 15D, and a spring 15F for raising a piston 15E in the direction of compression, and then the casing permanent magnet 4 is connected to an end of a piston rod 15G by means of a bolt 16. The second point different from the first embodiment is that the rotary valve 6 as the control means shown in the first embodiment is substituted for a distributor 17 in this second embodiment and this distributor 17 is mounted on the output shaft 1A by securing a rotor thereof to the output shaft 1A to be rotatable in integral therewith. Then, the ignition plugs 15B of the reciprocating engines 15 are lighted in order with electricity supplied thereto in synchronism with rotation of the rotor 1. Each of fuel supplying systems and exhaust systems for each of the reciprocating engines 15 carries out its fuel supplying operation and exhaust operation in synchronism with rotation of the rotor 1, respectively, but their descriptions are omitted as their constructions per se are well known.

The second embodiment is also similar to the first embodiment in operation, but there is a different point that the reciprocating engines 15 are lighted in order with the supply of electricity by means of the distributor 17 to move the casing permanent magnets 4 very close to the rotor permanent magnets 2 so that continuous rotation of the rotor 1 may be obtained as well. In this case, it is easy to control the operation speed of the reciprocating engines 15 mechanically in the conventional manner so that the cost for speed control may be lowered and it is possible to broaden its control range. As the result, usage of this type of the prime mover is broadened and it is useful particularly to automobiles.

In the second embodiment, it is shown that the rotor 1 is made in a two-pole type and the casing permanent magnets 4 are three which are arranged at a constant distance in the in the peripheral direction thereof, but as the first embodiment it is of course constructed such that the rotor is made in a three-pole type and the six casing permanent magnets 4 are arranged at a constant distance to make two groups one of which is made by three magnets which are arranged alternately in the peripheral direction so as to move the two groups close to the rotor permanent magnets 2, alternately.    In each of the embodiments, 18 in the drawing is a shading ring made of copper which is disposed at a pole end of each of the casing and rotor permanent magnets 2 and 4.    This ring 18  functions to relieve affection of pulsing magnetic force and cause the rotor 1 to absorb a part of energy of the magnetic force and change it to a rotational energy.

The principle theoretical formulas or equations relating to the prime mover described in the first embodiment and the result of experiment made by using a smaple model, will be reported as follows.

(Basic Construction of the Prime Mover)

As shown in Fig. 14, six permanent magnets 4 are arranged on a casing by leaving a constant distance therebetween (at a center angle of 60 degrees) in the peripheral direction thereof and these six magnets which are positioned alternately in the peripheral direction and both of the groups are operated alternately in order.    Three permanent magnets 2 are arranged on a rotor 1 by leaving a constant distance therebetween (at a center angle of 120 degrees) in the peripheral direction.

(Types and Characteristics of the Permanent Magnets to be Used)

Practical Rare-Earth Cobalt Magnet Standerized by the Magnet Industrial Institute

| | | |
|---|---|---|
| Residual Flux Density | Br | 8.0 - 9.0(K G) |
| Coercive Force | BHc | 7.0 - 8.5(KOe) |
| Maximum Energy Product | BHmax | 15.0-20.0(MG OB) |
| Measured Repulsive Force | Me | 1.5 (Kgf/cm$^2$) |

(Where a distance between the magnetic poles is 1 mm.)

(Equations Relating to the Values of Characteristics)

$$Pe = \frac{T \cdot N \cdot n}{716} \quad (PS) \qquad ①$$

$$T = F \cdot n \cdot L \quad (Kgfm) \qquad ②$$

$$F = \left\{ \frac{P}{(Zo\ min.)^2} - \frac{P}{(Zo\ max.)^2} \right\} \propto$$

$$= \left\{ \frac{1}{(Zo\ min.)^2} - \frac{1}{(Zo\ max.)^2} \right\} \alpha \cdot p \quad (Kgf) \quad ③$$

Wherein Pe (PS) is an effective horse power, N (rpm) is number of revolution, n is number of magnetic poles of the rotor, M (m) is a diameter of the rotor, T (Kgfm) is torque, is mechanical coefficient, F (Kgf) is a component force of a couple of forces, L (m) is a semidiameter of the rotor, P (Kgf) is an effective horse power of the cylinder, Zo min. (mm) is a minimum air gap, Zo max. (mm) is a maximum air gap, and $\alpha$ is coefficient of detour of magnetic pressure of 0.75.

Finding each of the values of the characteristics from the above equations ① to ③, it becomes:

From the equation ①,  $\quad T = \dfrac{716 \cdot Pe}{N \cdot \eta} \qquad ①'$

From the equation ②,  $\quad F = \dfrac{T}{n \cdot L} \qquad ②'$

Substituting the equation ②' for the equation ③

$$P \cdot \alpha \left\{ \frac{1}{(Zo\ min.)^2} - \frac{1}{(Zo\ max.)^2} \right\} = \frac{716 \cdot Pe}{n \cdot L \cdot N \cdot \eta} \qquad ③'$$

From the equation ③', it is led to:

$$P = \frac{716 \cdot Pe}{\alpha \cdot n \cdot L \cdot N \cdot \eta \left\{ \dfrac{1}{(Zo\ min.)^2} - \dfrac{1}{(Zo\ Max)^2} \right\}} \qquad ④$$

The characteristic curve of relative rotation numbers/ torque in motion is normally as shown in Fig. 16, and a torque T' is necessary to generate an output Pe when the rotation number is M'. However, this invention utilizing repulsive magnetic fields necessitates the torque in motion and the required repulsive force P' (S) times in comparison with the stationary torque T max. when the limitted rotation number is M.

Namely, it becomes:

$$S = T \text{ (max.)}/R$$

$$\therefore P' = P \cdot S$$

and then the necessary area C (cm$^2$) of the permanent magnet to be determined the above factors becomes:

$$C = \frac{P'}{Me}$$

$$\widehat{K} = \frac{\pi \cdot M \cdot \Theta}{360}$$

$$Z = \frac{C}{\widehat{K}}$$

wherein $\widehat{K}$ (cm) is a peripheral length of the magnet, Z is an axial length of the magnet, $\Theta$ is a center angle of the magnet.

Next, finding the necessary value of characteristic of the cylinder from each of the equations above, it becomes:

$$PT = \frac{\pi D^2 \cdot PA}{4} + SP$$

wherein PT (Kgf) is an effective force of proplleing of the cylinder, D (cm) is a bore of the cylinder, PA (Kgf/cm$^2$) is an air pressure to be used, and SP (Kgf) is a maximum return force of a spring.

Then, substituting the equation 3' for P, it becomes:

$$\frac{\pi\, D^2 \cdot PA}{4} + SP$$

$$= \frac{716 \cdot Pe}{\alpha \cdot n \cdot L \cdot N \cdot \eta \left\{ \dfrac{1}{(Zo\ min.)^2} - \dfrac{1}{(Zo\ max.)^2} \right\}}$$

Namely, it then becomes:

$$P = \sqrt{\frac{716 \cdot Pe \cdot 4}{\alpha \cdot n \cdot L \cdot N \cdot \eta \cdot \pi \cdot PA \left\{ \dfrac{1}{(Zo\ min.)^2} - \dfrac{1}{(Zo\ max.)^2} \right\}}} - SP$$

and then it completes the following equation in relation to the effective propelling force of the cylinder, namely

PT > P.

However, repulsive force P of the magnet is in proportion to the inverse square of the air gap Zo, as shown in Fig. 17. Namely, it is necessary to have substantially the same effective propelling force as the repulsive force in order to balance the repulsive force P generated with a minimum air gap (Zo min.) and to keep the distance for the balance. However, it is supposed that it can be reached to Zo min. by the delay of rising of repulsive force due to compressibility (going down) of the magnetic pressure or acceleration of stroke action of the cylinder. According to variation of the air gap (due to the stroke action of the cylinder), the actual effective operation area of the cylinder is the area with hatching, as shown in Fig. 17.

Next, it will be described concerning the capacity of the cylinder. It is considered that the hatching area in Fig. 17 is substantially the same as the hatching capacity in Fig. 18, but the truncated cone defined by an upper diameter $\phi$ 2d, and a lower area $\phi$ Do, functions effectively.

Namely,

$$d = \sqrt{\frac{4 \cdot P\ min.}{\pi \cdot PA}}$$

$$V\ max. = \frac{\pi \cdot Do^2 \cdot h}{4}$$

$$V\ min. = \frac{\pi \cdot h}{3} \quad (R^2 + Rd + d^2)$$

$$= \frac{V\ min.}{V\ max.} \qquad\qquad ⑤$$

wherein V max. is maximum capacity of the cylinder, V min. is minimum capacity of the cylinder, P min. is repulsive force at maximum air gap (Zo max.), and R is Do/2.

From the above factors, it is found the amount of air consumption q1 ( $\ell$/min.), the amount of air consumption at a piping section q2 ( $\ell$/min.), the amount of required output air Q ( $\ell$/min.), the input electric power consumed (KW), as follows:

$$La = 6\ n \cdot \ell1 \cdot N \quad (cm)$$

$$q1 = \frac{\pi \cdot D^2}{4} \times La \times 10^{-3}$$

$$q2 = \frac{a \cdot \ell 2 \quad PA \cdot \delta n \times 10^{-3}}{1.033}$$

$$Q = q1 + q2$$

$$KW = \frac{Lad}{\eta\, ad} \qquad \textcircled{5}'$$

$$Lad = \frac{k}{k-1} \cdot \frac{P1 \cdot Q}{6120} \left\{ (\frac{P2}{P1})^{(k-1)/k} - 1 \right\} \textcircled{6}$$

Substituting the equation $\textcircled{6}$ for the equation $\textcircled{5}'$, then it becomes:

$$KW = \frac{1.4\; P1 \cdot Q \left\{ (\frac{P2}{P1})^{0.4/1.4} - 1 \right\}}{0.4 \times 6120\; \eta\, ad}$$

wherein La (cm) is a total stroke of the cylinder per min., $\delta$ n is number of a cylinder x number of magnetic poles (cycles)/min., $\ell 1$ (cm) is a length of a stroke of the cylinder, a ($cm^2$) is the sectional area of a pipe, $\ell 2$ (cm) is a length of the pipe, Lad (KW) is a theoretical adiabatic compression power, $\eta$ ad is a total adiabatic coefficient of 0.4 - 0.5, $\underline{k}$ is an air-adiabatic exponent of 1.4, P1 ($Kgf/m^2$) is an intaked air pressure (abs) of $1.033 \times 10^4$, Ps ($Kgf/m^2$) is a pressure (abs) after compression and defined by using pressure + o.5, in consideration of pressure loss.

Finding a cylinder speed $V$ (mm/sec.), it becomes:

$$N = N/60 \text{ (rpm)}$$

$$n \times N/60 = \frac{N \cdot n}{60} \text{ (cycle/sec.)}$$

0152252

therefore, it becomes;

$$V = \frac{2\,\ell \cdot N \cdot n}{60} \quad (mm/sec.)$$

Finding an output power Pe (PS), it becomes:

$$Pe = 0.7355Pe \ (KW)$$

$$S = \frac{0.7355\ Pe}{KW}$$

Next, calculating the model case in which Pe = 65(PS), N = 500 (rpm), n = 3, M = 350 (mm), it becomes:

$$P = \frac{716 \times 65}{0.75 \times 3 \times 0.175 \times 500 \times 0.8 \times 0.99}$$

$$= 298.48$$

$$P' = 2.5 \times P = 2.5 \times 298.48$$

$$= 746.2$$

$$C = \frac{746.2}{1.5}$$

$$= 497.47 \ (cm^2)$$

$$\widehat{K} = \frac{\pi \times 35 \times 58}{360}$$

$$= 17.715 \ (cm)$$

$$Z = \frac{497.47}{17.715}$$

$$= 28.08 \ (cm)$$

$$D = \sqrt{\dfrac{716 \times 65 \times 4}{0.75 \times 3 \times 0.175 \times 500 \times 0.75 \times \pi \times 5 \left(\dfrac{1}{12} - \dfrac{1}{102}\right)}} - 15$$

$$= 8.13 \ (\text{cm})$$

$$P \text{ min.} = \dfrac{P'}{(Z_o \text{ max.})^2} = \dfrac{746.2}{10^2}$$

$$= 7.462$$

$$d = \sqrt{\dfrac{4 \times 7.462}{\pi \times 5}}$$

$$= 1.378 \ (\text{cm})$$

$$V \text{ max.} = \dfrac{\pi \times 9.5^2 \times 0.9}{4}$$

$$= 63.79$$

$$V \text{ min.} = \dfrac{\pi \times 0.9 \ (4.75^2 + 4.75 \times 1.378 + 1.378^2)}{3}$$

$$= 29.22$$

$$\therefore \quad \eta = \dfrac{29.22}{63.79}$$

$$= 0.458$$

$$La = 6 \times 3 \times 0.9 \times 500$$

$$= 8.100 \ (\text{cm})$$

$$q1 = \dfrac{\pi \times 9.5^2}{4} \times 8100 \times 10^{-3}$$

$$= 574 \ (\ell/\text{min.})$$

$$q2 = \frac{113 \times 40 \times 5 \times 6 \times 3 \times 10^{-3}}{1.033}$$

$$= 3.94 \ (\ell/min.)$$

$$\therefore Q = 574 + 3.94$$

$$\doteqdot 578 \ (\ell/min.)$$

$$KW = \frac{1.4 \times 1.033 \times 10^{4} \times 0.578}{0.4 \times 6120 \times 0.45} \left\{ \left(\frac{6.533 \times 10^{4}}{1.033 \times 10^{4}}\right)^{0.4/1.4} - 1 \right\}$$

$$= 5.26$$

Therefore, a compressor of 5.5(KW) is used here.

$$V = \frac{2 \times 9 \times 500 \times 3}{60}$$

$$= 450 \ (mm/sec.)$$

$$S = \frac{0.7355 \times 65}{5.5}$$

$$= 8.69$$

Thus, it becomes to obtain an output energy of 8.69 times of the input energy.

CLAIMS:

1.   A prime mover in which an output shaft (1A) is rotated continuously by utilizing permanent magnets, the prime mover comprising;

a rotor (1) operatively connected to the output shaft (1A),

rotor permanent magnets (2) disposed reciprocatingly on the periphery of the rotor (11) at a plurality of positions, each rotor magnet (2) having approximately the same radius,    there being a constant distance between the rotor magnets (2) in the peripheral direction thereof,

a casing (3) for housing the rotor (1),

casing permanent magnets (4) mounted respectively on the interior periphery of the casing at a plurality of positions, there being a constant distance therebetween in the peripheral direction and the casing magnets (4) being arranged such that they face rotor magnets (2) with the same magnetic polarity,

reciprocating means for reciprocatingly moving the casing magnets (4) respectively relative to the rotor magnets (2) away from and closely approaching the same, and

control means for actuating the reciprocating means in order along a direction of rotation of the rotor (1) so as to synchronize with the rotation of the rotor (1).

2. A permanent magnet prime mover according to claim 1 wherein the reciprocating means comprises air cylinders (5) and the control means comprises a rotary valve (6).

3. A permanent magnet prime mover according to claim 2 wherein the rotary valve (6) is directly connected to the rotor (1).

4. A permanent magnet prime mover according to claim 1 wherein the reciprocating means comprises reciprocating engines (15) and the control means comprises a distributor (17).

5. A permanent magnet prime mover according to claim 4 wherein the reciprocating engines (15) are gasoline engines.

6. A permanent magnet prime mover according to any one of claims 1 to 5 wherein the magnets (2, 4) each comprise a rare-earth magnet.

7. A permanent magnet prime mover according to any one of claims 1 to 6 wherein the magnets (2, 4) comprise a plurality of magnet elements which are arranged to have an opposite polarity alternately by leaving a suitable distance therebetween in the direction of axis of rotation.

8.    A permanent magnet prime mover according to any one of the preceding claims wherein the casing magnets (4) are arranged with an even number to oppose to one another in the radial direction of the rotor (1).

0152252

Fig. 1

Fig. 2

Fig. 3

6
6A
6B
6b
6a

Fig. 4

6
6B
6b
6a
6A

Fig. 5

2A
(4A)
S
L
R
ℓ

2A
(4A)
N

R

2A
(4A)
S
L

Fig.6A

Fig.6B

Fig.6C

Fig.7A

Fig.7B

Fig. 8

Fig.9A

Fig.9B

6/9

0152252

Fig.10

Fig. 11

8|9

0152252

## Fig.13

## Fig.12

## Fig.14

Fig.15

Fig.18

Fig.16

Fig.17

0152252